Europäisches Patentamt

European Patent Office

Office européen des brevets

(19)

(11) **EP 0 746 091 B1**

(12) **EUROPÄISCHE PATENTSCHRIFT**

(45) Veröffentlichungstag und Bekanntmachung des Hinweises auf die Patenterteilung:
**20.09.2000 Patentblatt 2000/38**

(51) Int Cl.[7]: **H02P 21/00**

(21) Anmeldenummer: **96108422.5**

(22) Anmeldetag: **28.05.1996**

(54) **Verfahren zur Echtzeitberechnung eines Modells der Induktionsmaschine mit Wechselrichterspeisung**

Method to compute in real time a model of an induction machine supplied by an inverter

Procédé de calcul en temps réel d'un modèle d'une machine asynchrone alimentée par un onduleur

(84) Benannte Vertragsstaaten:
**BE DE ES FR**

(30) Priorität: **02.06.1995 DE 19520240**

(43) Veröffentlichungstag der Anmeldung:
**04.12.1996 Patentblatt 1996/49**

(73) Patentinhaber: **DaimlerChrysler AG**
**70546 Stuttgart (DE)**

(72) Erfinder: **Depenbrock, Manfred, Prof. Dr. Ing.**
**44797 Bochum-Stiepel (DE)**

(74) Vertreter: **Luderschmidt, Schüler & Partner GbR Patentanwälte,**
**Postfach 3929**
**65029 Wiesbaden (DE)**

(56) Entgegenhaltungen:
• **HABETLER T G ET AL: "STATOR RESISTANCE TUNING IN A STATOR FLUX FIELD ORIENTED DRIVE USING AN INSTANTANEOUS HYBRID FLUX ESTIMATOR" 13.September 1993 , CONTROL IN POWER ELECTRONICS, BRIGHTON, SEPT. 13 - 16, 1993, VOL. 4, PAGE(S) 292 - 299 , INSTITUTION OF ELECTRICAL ENGINEERS XP000427090**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Echtzeitberechnung eines Modells für über Wechselrichter gespeiste Induktionsmaschinen mit Darstellung der Zustandsgrößen durch jeweils zwei orthogonale Koordinaten im ständerfesten Bezugssystem innerhalb von sich ständig wiederholenden Berechnungsspielen einer konstanten Dauer.

Eine Grundaufgabe der Antriebsregelung ist es, das Drehmoment von elektrischen Maschinen gezielt zu kontrollieren und gleichzeitig die magnetischen Flüsse der Maschinen ständig auf den für den jeweiligen Betriebspunkt optimalen Werten zu halten.

Bei einer Induktionsmaschine errechnet sich der Istwert des inneren Drehmoments M pro Polpaar z.B. nach der Gleichung

$$M = \frac{3}{2} \bullet \text{Im}\left[\underline{\Psi}_u^* \bullet \underline{i}_s\right] = \frac{3}{2} \bullet \left[\Psi_{\alpha a} \bullet i_{\beta a} - \Psi_{\beta a} \bullet i_{\alpha a}\right]$$

mit

$\underline{\Psi}_u^* = \Psi_{\alpha a} - j \bullet \Psi_{\beta a}$ :    konjugiert komplexer Raumzeiger der Ständerflußverkettungen

$\underline{i}_s = i_{\alpha a} + j \bullet i_{\beta a}$ :    Ständerstrom-Raumzeiger

$$\underline{i}_s = i_{\alpha a} + j \bullet i_{\beta a} \qquad :$$

$$\left. \begin{aligned} i_{\alpha a} &= i_a - \frac{1}{3} \bullet \left(i_a + i_b + i_c\right) \\[2em] i_{\beta a} &= \frac{1}{\sqrt{3}} \bullet \left(i_b - i_c\right) \end{aligned} \right\} \qquad (1)$$

$i_{\alpha a}, i_{\beta a}$ :    orthogonale Komponenten des Ständerstrom-Raumzeigers

$i_a, i_b, i_c$ :    Ständerströme, Stranggrößen

Für die Zusammenhänge zwischen den Größen $\Psi_{\mu a}$, $\Psi_{\mu b}$, $\Psi_{\mu c}$ (Sternpunkt-Ständerflußverkettungen) und $\Psi_{\alpha a}$, $\Psi_{\beta a}$ (orthogonale Komponenten des Ständerfluß-Raumzeigers) sowie für alle anderen Ständer- oder Rotorgrößen gelten entsprechende Gleichungen. Insbesondere zeigt die Gleichung (1), wie man aus drei Stranggrößen, deren Summe nicht gleich Null sein muß, die orthogonalen α-β-Komponenten des zugeordneten komplexen Raumzeigers bestimmen kann. Die zur Berechnung des Drehmoments M notwendigen Stromsignale lassen sich im gesamten Ständerfrequenzbereich leicht in analoger oder digitaler Form meßtechnisch aus den Ständerströmen ableiten. Für die Flußverkettungen gibt es dagegen keine praktisch brauchbaren Meßumformer, sie müssen aus anderen, leichter meßbaren Größen berechnet werden, z.B. als Teilstruktur eines Motormodells. In einem vollständigen Motormodell werden z.B. aus den Eingangsgrößen Ständerspannung und Drehzahl die Zustandsgrößen Ständerfluß und Rotorfluß berechnet. Aus diesen können wiederum auch die Modellströme berechnet werden. Diese stehen dann z.B. vorteilhaft als Eingangsgrößen zur Berechnung des zu regelnden Drehmoments zur Verfügung, weil die gemessenen Werte der wirklichen Motorströme wegen des Zeitverzugs durch die verwendeten Meßeinrichtungen erst mit Verspätung zur Verfügung stehen. Außerdem können beginnende Abweichungen zwischen den Strömen des Modells und des Motors dazu benutzt werden, die Parameter des Modells an die sich betrieblich ändernden Motorparameter anzupassen. Aus diesen Gründen werden nach dem Stand der Technik bei hohen Anforderungen an Dynamik und Genauigkeit von Antriebsregelungen für Induktionsmaschinen sehr häufig vollständige Motormodelle benützt (siehe beispielsweise Jänecke, M.; Kremer, R.; Steuerwald, G.: Direct Self-Control (DSC), a novel method of controlling asynchronous machines in traction applications; EPE Aachen (1989), Seiten 75 bis 81).

Die Modellgrößen werden nach dem Stand der Technik vorzugsweise durch digital arbeitende Rechenwerke in konstanten Zeitabständen $T_c$ bestimmt, wobei die Zeitdauer $T_c$ üblicherweise erheblich kleiner ist als die kleinste Ersatz-Zeitkonstante des wirklichen Motors. Trotzdem darf leider nicht vorausgesetzt werden, daß z.B. die Flußverkettungen für die Zeitdauer $T_c$ eines Berechnungsspiels wenigstens angenähert konstant bleiben. Beträgt z.B. die Periodendauer der Ständerspannung 3,6 ms, das entspricht einer Frequenz von nicht einmal 280 Hz, so verdreht sich der Rotorflußraumzeiger im ständerfesten Bezugssystem während einer Berechnungsspieldauer von nur 100 µs um 10°. Der Betrag der Änderung $\Delta \underset{\rightarrow r}{\Psi}$ des Flußraumzeigers beträgt dann bereits 17,4 % von $|\underset{\rightarrow r}{\Psi}|$! Unter diesen Bedingungen arbeiten alle gebräuchlichen Verfahren für numerische Echtzeit-Integration mit nicht tragbaren Fehlern für die Berechnung der nicht direkt meßbaren Zustandsgrößen (siehe beispielsweise Franzen, F.; Nelles, D.; Tuttas, CH.: Anschauliche Darstellung einfacher Integrationsalgorithmen, etz Archiv, Bd. 10 (1988), Heft 8, Seiten 267 bis 272).

Eine Ausführungsform der gebräuchlichen Numerischen Integrationsmethoden zur Berechnng des Rotorflusses bei niedriger Drehzahl basierend auf der Maschinengeschwindigkeit und der Rotor- Zeitkonstante wird in D1 ('Stator Resistance Tuning In A Stator Flux Field Oriented Drive Using An Instantaneous Hybrid Flux Estimator' 13. September 1993, Control In Power Electronics, Brighton von T.G. Habetler; XP000427090) vorgestellt.

Um dieses Problem zu umgehen, werden z.B. häufig die ständerfrequenten Ströme und Spannungen vor der numerischen Integration durch rotatorische Koordinatentransformation algebraisch umgerechnet. Im rotorfesten Bezugssystem (siehe beispielsweise Gedeon, G.; Klausecker, K.; Lang, W.: Mikrocomputer-Antriebssteuerung für ICE, Elektrische Bahnen eb, 86. Jahrgang, (1988), Heft 7, Seiten 229 bis 235) schwingen sie dann nur noch mit Schlupffrequenz. Im am Rotorfluß orientierten Bezugssystem (siehe beispielsweise Gabriel, R.: Mikrorechnergeregelte Asynchronmaschine, ein Antrieb für hohe dynamische Anforderungen, Regelungstechnik, 32. Jahrgang, (1984), Heft 1, Seiten 18 bis 26) werden sie dann stationär im Idealfall zu Gleichgrößen.

Aufgabe der vorliegenden Erfindung ist es, ein Verfahren zur Echtzeitberechnung eines Modells der Induktionsmaschine mit Wechselrichtereinspeisung durch einen Signalprozessor der eingangsgenannten Art anzugeben, welches bei minimalen Rechenfehler der numerischen Integration den erheblichen Mehrbedarf an Rechenzeit und Speicherkapazität sowie die sonstigen Nachteile der rotatorischen Koordinatentransformation vermeidet.

Diese Aufgabe wird in Verbindung mit den Merkmalen des Oberbegriffes erfindungsgemäß dadurch gelöst, daß zusätzlich zu den Werten der Zustandsgrößen, die an den Zeitpunkten auftreten, welche die Berechnungsspiele trennen, auch die Mittelwerte der Zustandsgrößen über die Berechnungsspieldauer gebildet und berechnet werden und daß aus diesen Mittelwerten der Koordinaten von Ständerfluß und Rotorfluß die Inkremente der Koordinaten vom Rotorfluß berechnet werden, die nach Addition zu den Koordinatenwerten, die dem Anfangszeitpunkt eines Berechnungsspiels zugeordnet sind, die Koordinaten vom Rotorfluß ergeben, die dem Endzeitpunkt des Berechnungsspiels zugeordnet sind, entsprechend der bei Raumzeigerdarstellung gültigen Beziehung

$$\underset{\rightarrow r}{\Psi}(\nu) = \underset{\rightarrow r}{\Psi}(\nu - 1) + \left[-\omega_{\sigma\nu} + j\omega(\nu - 1)\right] \bullet T_c \bullet \underset{\rightarrow r}{\bar{\Psi}}(\nu) + \omega_{\sigma\nu} \bullet T_c \bullet \underset{\rightarrow \mu}{\bar{\Psi}}(\nu)$$

mit $\nu$ = Ordnungszahl zur Kennzeichnung des $\nu$-ten Berechnungsspiels; $\underset{\rightarrow r}{\Psi}(\nu)$ = Wert des Rotorflußraumzeigers am Ende des $\nu$-ten Berechnungsspiels; $\underset{\rightarrow r}{\Psi}(\nu-1)$ = Wert des Rotorflußraumzeigers am Anfang des $\nu$-ten Berechnungsspiels; $\underset{\rightarrow r}{\bar{\Psi}}(\nu)$ = Mittelwert des Rotorflußraumzeigers im $\nu$-ten Berechnungsspiel; $\underset{\rightarrow \mu}{\bar{\Psi}}(\nu)$ = Mittelwert des Ständerflußraumzeigers im $\nu$-ten Berechnungsspiel; $\omega_{\sigma\nu}$ = Kehrwert der rotorseitigen Streuzeitkonstanten für das $\nu$-te Berechnungsspiel; $\omega(\nu-1)$ = mit der Polpaarzahl multiplizierte mechanische Winkelgeschwindigkeit am Anfang des $\nu$-ten Berechnungsspiels; $T_c$ = Berechnungsspieldauer; $j = \sqrt{-1}$ = imaginäre Einheit.

Die mit der Erfindung erzielbaren Vorteile bestehen insbesondere darin, daß es unter Ausnutzung der besonderen Eigenschaften des dynamischen Systems "Induktionsmaschine mit Wechselrichter-speisung" möglich wird, mittels einer daran angepaßten Struktur des Maschinenmodells und durch ein neues Berechnungsverfahren eine praktisch fehlerfreie numerische Integration der Fluß-Zustandsgrößen durchzuführen.

Zweckmäßig wird als Mittelwert des Rotorflußraumzeigers im $\nu$-ten Berechnungsspiel der Wert verwendet, der sich ergibt, wenn man den dem Anfangszeitpunkt des Berechnungsspiels zugeordneten Wert mit einem komplexen Faktor $\underline{F}(\varepsilon_\nu)$ multipliziert der nach folgender Gleichung berechnet wird:

$$\underline{F}(\varepsilon_\nu) = \frac{\sin \varepsilon_\nu}{\varepsilon_\nu} \bullet e^{j\varepsilon_\nu} \approx \left(1 - \frac{2}{3}\varepsilon_\nu^2\right) + j\left(\varepsilon_\nu - \frac{1}{3}\varepsilon_\nu^3\right)$$

mit $\varepsilon_\nu$ = halber Wert der Winkeldrehung des Rotorflußraumzeigers während des $\nu$-ten Berechnungsspiels im statorfe-

sten Bezugssystem.

Dabei wird vorteilhaft der halbe Wert der Winkeldrehung des Rotorflußraumzeigers durch Multiplikation der halben Berechnungsspieldauer mit der Winkelgeschwindigkeit des Rotorflußraumzeigers, die dem Anfangszeitpunkt des ν-ten Berechnungsspiels im statorfesten Bezugssystem zugeordnet ist, berechnet, wobei diese Winkelgeschwindigkeit aus der Summe aus der mit der Polpaarzahl multiplizierten mechanischen Winkelgeschwindigkeit und der dem Anfangszeitpunkt des ν-ten Berechnungsspiels zugeordneten Wert $\omega_r(\nu-1)$ der Kreisfrequenz der elektromagnetischen Rotorgrößen gebildet wird, die sich aus der folgenden Formel berechnet

$$\omega_r(\nu-1) = R_{r\nu} \bullet \frac{\text{Im}\left[\dot{\underset{\rightarrow}{\Psi}}^*_r(\nu-1) \bullet \underset{\rightarrow}{i}_s(\nu-1)\right]}{\text{Re}\left[\dot{\underset{\rightarrow}{\Psi}}^*_r(\nu-1) \bullet \underset{\rightarrow}{\Psi}_r(\nu-1)\right]}$$

mit $R_{r\nu}$ = Wert des Rotor-Ersatzwiderstandes für das ν-te Berechnungsspiel; $\underset{\rightarrow}{\Psi}^*_r(\nu-1)$ = konjugiert komplexer Wert des Ständerflußraumzeigers am Anfang des ν-ten Berechnungsspiels; $\underset{\rightarrow}{\Psi}^*_r(\nu-1)$ = Wert des Rotorflußraumzeigers am Anfang des ν-ten Berechnungsspiels; $\underset{\rightarrow}{i}_s(\nu-1)$ = Wert des Ständerstromraumzeigers am Anfang des ν-ten Berechnungsspiels.

Des weiteren werden vorteilhaft zur Berechnung des Mittelwerts vom Ständerflußraumzeiger die Zeitverläufe der auf die halbe Gleichspannung normierten Spannungen zwischen den Maschinenanschlüssen und dem Mittelpotentialpunkt der Gleichspannung am Eingang des Wechselrichters für den Zeitraum eines jeden Berechnungsspiels durch drei Variablen $X_{a\nu}$, $X_{b\nu}$, $X_{c\nu}$ beschrieben, deren Vorzeichen mit dem Vorzeichen der zugeordneten Spannung am Anfangszeitpunkt des Berechnungsspiels übereinstimmt und deren Betrag sich dadurch ergibt, daß man die Zeitspanne zwischen einem Wechsel des Potentials am zugeordneten Maschinenanschluß und dem Ende des Berechnungsspiels auf die Dauer des Berechnungsspiels normiert.

Dabei wird vorteilhaft zur Berechnung des Mittelwerts vom Ständerflußraumzeiger für jedes Berechnungsspiel ein Raumzeiger aus den zeitlichen Mittelwerten der Integrale über die drei auf die halbe Gleichspannung normierten Spannungen zwischen den Maschinenanschlüssen und dem Mittelpotentialpunkt gebildet, wobei die drei Mittelwerte der Integrale $\overline{\int w_{m\nu}}$ nach folgender Gleichung berechnet werden:

$$\overline{\int w_{m\nu}} = \text{sign}\left[X_{m\nu}\right] \bullet \left[0{,}5 - X_{m\nu}^2\right]$$

mit m = a, b, c; sign$[X_{m\nu}]$ = Vorzeichen der Variablen $X_{m\nu}$, d.h. $X_{a\nu}$, $X_{b\nu}$, $X_{c\nu}$

Insbesondere wird der Mittelwert $\underset{\rightarrow}{\Psi}_\mu(\nu)$ vom Ständerflußraumzeiger für jedes Berechnungsspiel nach folgender Gleichung berechnet:

$$\bar{\underset{\rightarrow}{\Psi}}_\mu(\nu) = \underset{\rightarrow}{\Psi}_\mu(\nu-1) + \left[\overline{\int \underset{\rightarrow}{w}_\nu} \bullet E_{d\nu} - \tfrac{1}{2} \bullet \overline{R_{s\nu} \bullet \underset{\rightarrow}{i}_s}(\nu)\right] \bullet T_c$$

mit $\underset{\rightarrow}{\Psi}_\mu(\nu-1)$ = Wert des Ständerflußraumzeigers am Anfang des ν-ten Berechnungsspiels; $E_{d\nu}$ = Wert der halben Gleichspannung für das ν-te Berechnungsspiel; $\overline{\int \underset{\rightarrow}{w}_\nu}$ = Raumzeiger der Mittelwerte der Integrale über die normierten Spannungen der Maschinenanschlüsse im ν-ten Berechnungsspiel; $\overline{R_{s\nu} \bullet \underset{\rightarrow}{i}_s}(\nu)$ = Mittelwert des Raumzeigers aller inneren Spannungsabfälle des Wechselrichters und der Ständerwicklung im ν-ten Berechnungsspiel.

Dabei wird vorteilhaft zur Berechnung eines Inkrements $\Delta \underset{\rightarrow}{\Psi}_\mu(\nu)$ vom Wert des Ständerflußraumzeigers am Anfang des ν-ten Berechnungsspiels zum Wert am Ende dieses Berechnungsspiels zunächst ein Raumzeiger aus den zeitlichen Mittelwerten $w_{a\nu}$, $w_{b\nu}$, $w_{c\nu}$ der auf die halbe Gleichspannung normierten Spannungen zwischen den Maschinenanschlüssen und dem Mittelpotentialpunkt gebildet, wobei die drei Mittelwerte $w_{m\nu}$ nach folgender Gleichung berechnet werden:

$$W_{m\nu} = \text{sign}[X_{m\nu}] \cdot [1 - 2 \cdot |X_{m\nu}|]$$

Insbesondere wird das Inkrement $\Delta \underset{\rightarrow}{\Psi}_\mu(\nu)$ des Ständerflußraumzeigers zwischen dem Anfang und dem Ende des $\nu$-Berechnungsspiels nach folgender Gleichung berechnet:

$$\Delta \underset{\rightarrow \mu}{\Psi}(\nu) = \left[ \underset{\rightarrow \nu}{w} \bullet E_{d\nu} - \overline{\underset{\rightarrow s\nu}{R_{s\nu}} \bullet \underset{\rightarrow s}{i_s}}(\nu) \right] \bullet T_c$$

mit $\underset{\rightarrow \nu}{w}$ = Raumzeiger der Mittelwerte der normierten Spannungen der Maschinenanschlüsse im $\nu$-ten Berechnungsspiel.

Ferner wird vorteilhaft zur vereinfachten Berechnung des zeitlichen Mittelwerts des Raumzeigers der inneren Spannungsabfälle der Ständerwicklung der für das $\nu$-te Berechnungsspiel aktuelle Sternpunkt-Ersatzwiderstand der Ständerwicklung mit dem Mittelwert des Ständerstromraumzeigers multipliziert, der sich ergibt, wenn man den Wert des Stromraumzeigers, der dem Anfangszeitpunkt des $\nu$-ten Berechnungsspiels zugeordnet ist, mit einem komplexen Faktor $\underline{F}(\varepsilon_\nu)$ multipliziert, der nach folgender Gleichung berechnet wird:

$$\underline{F}(\varepsilon_\nu) = \frac{\sin \varepsilon_\nu}{\varepsilon_\nu} \bullet e^{j\varepsilon_\nu} \approx \left(1 - \frac{2}{3}\varepsilon_\nu^2\right) + j\left(\varepsilon_\nu - \frac{1}{3}\varepsilon_\nu^3\right)$$

Vorzugsweise wird der Faktor $\underline{F}(\varepsilon_\nu)$ durch den Wert eins angenähert.

Die Erfindung wird nachstehend anhand der in der Zeichnung dargestellten Ausführungsbeispiele erläutert. Es zeigen:

Fig. 1 die gewählte Ersatzschaltung für das Modell von Stromrichter und Induktionsmaschine,

Fig. 2 den Zeitverlauf der Spannung sowie den ihres Integrals zwischen einem der Verbindungspunkte zwischen Wechselrichter und Maschine und dem Mittenpotentialpunkt der Eingangsgleichspannung,

Fig. 3 Rotorfluß-Raumzeigergrößen im $\nu$-ten Berechnungsspiel,

Fig. 4 einen Signalflußplan und eine symbolische Blockstruktur für das Verfahren zur fortlaufenden numerischen Berechnung der Zustandsgrößen eines Modells der Induktionsmaschine.

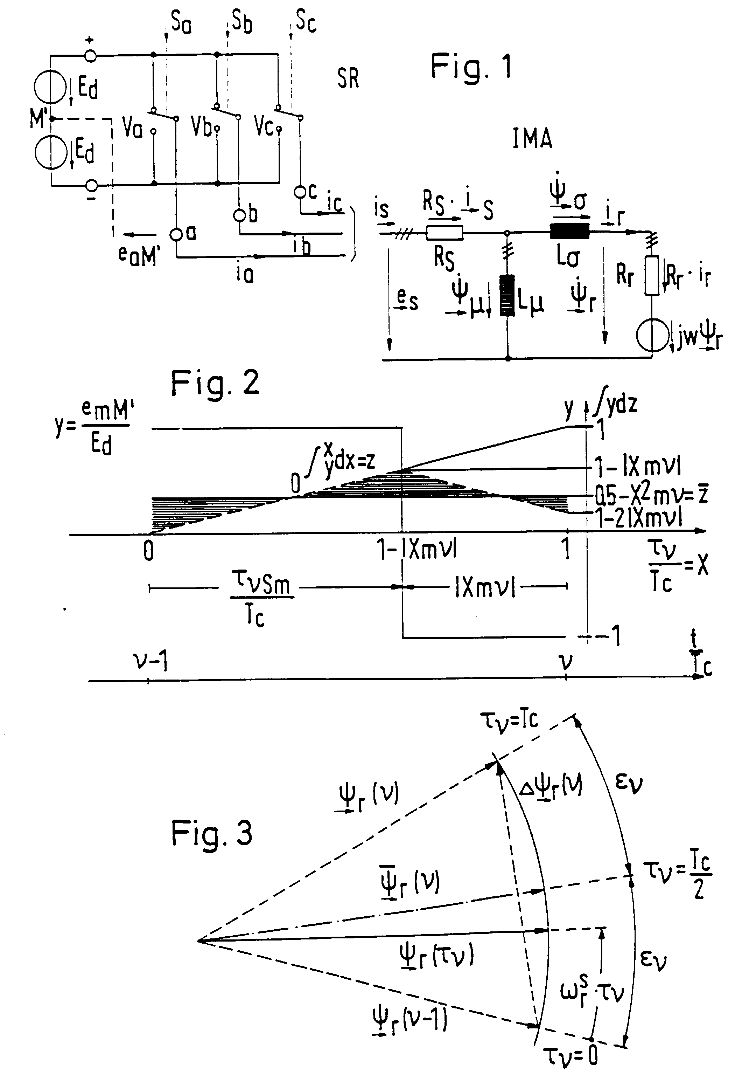

In Fig. 1 ist die gewählte Ersatzschaltung für das Modell von Stromrichter SR und Induktionsmaschine IMA dargestellt. Über Umschaltgeräte Va, Vb, Vc (Stromrichterventile) sind die Motoranschlüsse a, b, c der Induktionsmaschine IMA wahlweise mit der positiven bzw. negativen Zwischenkreisspannung (halbe Zwischenkreisspannung $=E_d$) verbindbar. Die zur Ansteuerung der Umschaltgeräte erforderlichen Schaltsignale für die Stränge m=a bzw. m=b bzw. m=c des Wechselrichters betragen $S_a$, $S_b$, $S_c$ (allgemein $S_m$). Die Strangströme bzw. Ständerströme betragen $i_a$, $i_b$, $i_c$. Die Spannungen zwischen dem Mittenpotentialpunkt M' der Eingangsgleichspannung und den Strängen betragen $e_{aM'}$, $e_{bM'}$, $e_{cM'}$ (allgemein $e_{mM'}$).

Die Ersatzschaltung für das Modell der Induktionsmaschine IMA beinhaltet den Ständerwiderstand $R_S$, den Rotorwiderstand $R_r$, die Hauptinduktivität $L_\mu$ und die Streuinduktivität $L_\sigma$.

Unter der Annahme, daß die einem Zeitpunkt $t_{\nu-1} = (\nu-1) \cdot T_c$ zugehörenden Werte vom Ständerflußraumzeiger $\underset{\rightarrow \mu}{\Psi}(\nu-1)$ und vom Rotorflußraumzeiger $\underset{\rightarrow r}{\Psi}(\nu-1)$ durch Berechnung eines Maschinenmodells bekannt sind, können unter Verwendung der aktuellen Werte der Maschinenparameter alle sonst noch interessierenden Betriebsgrößen rein algebraisch berechnet werden. Der Parameter $\omega(\nu-1)$ ist definiert als die mit der Polpaarzahl multiplizierte Winkelgeschwindigkeit des Rotors relativ zum Ständer der realen Maschine. Entsprechend der in Fig.1 dargestellten Ersatzschaltung von Wechselrichter und Motor ergeben sich die folgenden Zusammenhänge.

Ständerstromraumanzeiger:

$$\underset{\rightarrow s}{i}(v-1) = \underset{\mu}{L}^{-1}(v-1) \bullet \underset{\rightarrow\mu}{\Psi}(v-1) + \underset{\sigma}{L}^{-1}(v-1) \bullet \underset{\rightarrow\sigma}{\Psi}(v-1)$$

$$\underset{\rightarrow\sigma}{\Psi} = \underset{\rightarrow u}{\Psi} - \underset{\rightarrow r}{\Psi}$$

Moment pro Polpaar:

$$M(v-1) = \frac{3}{2} \bullet \operatorname{Im}\left[ \underset{\rightarrow\mu}{\overset{\bullet}{\Psi}}(v-1) \bullet \underset{\rightarrow s}{i}(v-1) \right]$$

Schlupf – Kreisfrequenz:

$$\underset{r}{\omega}(v-1) = \frac{2}{3} \bullet \underset{r}{R}(v-1) \bullet M(v-1) \bullet \left|\underset{\rightarrow r}{\Psi}(v-1)\right|^{-2}$$

Winkelgeschwindigkeit des Rotorflußraumzeigers im ständerfesten Bezugssystem:

$$\underset{r}{\omega}^{s}(v-1) = \omega(v-1) + \underset{r}{\omega}(v-1)$$

(2)

Entsprechend Fig. 1 können die Spannungen $e_{mM}'$ (m = a; b; c) nur die Werte $\pm E_d$ annehmen, d.h. es wird vorausgesetzt, daß alle in der Realität auftretenden Abweichungen von dieser Idealisierung in dem Raumzeiger $R_s \bullet \underset{\rightarrow s}{i}$ der Spannungsabfälle auf der Ständerseite mitberücksichtigt werden.

In Fig. 2 ist der auf $E_d$ bezogene Zeitverlauf von einer der drei Wechselrichterspannungen $e_{mM}'$ während des v-ten Berechnungsspiels als ausgezogene Kurve dargestellt. Der Zeitverlauf kann eindeutig allein durch eine Variable $X_{mv}$ beschrieben werden, wenn man definiert, daß deren Vorzeichen sign gleich dem Vorzeichen der Spannung $e_{mM'}$ (v-1) zum Zeitpunkt $t_{v-1} = (v-1) \bullet T_c$ ist. Der Schaltzeitpunkt, an dem das Potential des Anschlußpunktes m im v-ten Berechnungsspiel wechselt, wird durch den Betrag von $X_{mv}$ eindeutig beschrieben.

$$X_{mv} = \operatorname{sign}\left[e_{mM}(v-1)\right] \bullet \left[1 - \frac{\tau_{vSm}}{T_c}\right] \; ; \qquad m = a; \; b; \; c \qquad (3)$$

| | |
|---|---|
| $\tau_v = t - (v-1) \bullet T_c$ : | Zeitvariable für das v-te Berechnungsspiel |
| $0 < \tau_{vSm} < T_c$ : | Potentialwechsel am Anschluß m zum Zeitpunkt $\tau_v = \tau_{vSm}$ |
| $\tau_{vSm} = T_c$ : | kein Potentialwechsel im v-ten Berechnungsspiel |

Die Variablen $X_{mv}$ werden in jedem Berechnungsspiel auf der Basis der aktuellen Soll-, Meß- und Modellgrößen zur Realisierung über die Schaltsignale $S_m$ am Motor während des nächsten Berechnungsspiels neu festgelegt. Sobald dies geschehen ist, können, ausgehend vom dadurch definierten Verlauf der Spannungen $e_{mM'}$ und den in Gleichung (2) aufgeführten Größen, die neuen Zustandsgrößen des Motormodells erfindungsgemäß durch das nachfolgend beschriebene Verfahren für den Zeitpunkt $t_v = v \bullet T_c$ praktisch fehlerfrei bestimmt werden.

Für den in Fig. 1 eingetragenen Raumzeiger $\underset{\rightarrow u}{\Psi}$ der Magnetisierungsspannungen gilt

$$\dot{\underset{\rightarrow\mu}{\Psi}} = \underset{\rightarrow S}{e} - R_S \bullet \underset{\rightarrow S}{i}$$

Man nimmt praxisgerecht an, daß alle Änderungen der in Fig. 1 eingetragenen Maschinenparameter während der Dauer eines Berechnungsspiels vernachlässigt werden können, z. B.

$$R_S(\tau_\nu) \approx R_S(\tau_\nu = 0) = R_S(\nu - 1) = R_{S\nu} = \text{konst.}; \qquad 0 < \tau_\nu < T_c$$

Integriert man die Gleichung für den Raumzeiger $\dot{\underset{\rightarrow\mu}{\Psi}}$ über die Dauer des $\nu$-ten Berechnungsspiels, so erhält man die resultierende Flußänderung:

$$\Delta \underset{\rightarrow\mu}{\Psi}(\nu) = \underset{\rightarrow\mu}{\Psi}(\nu) - \underset{\rightarrow\mu}{\Psi}(\nu - 1)$$

$$\Delta \underset{\rightarrow\mu}{\Psi}(\nu) = T_c \bullet \left[ \underset{\rightarrow S}{\overline{e}}(\nu) - R_{S\nu} \bullet \underset{\rightarrow S}{\overline{i}}(\nu) \right]$$

Auf der rechten Gleichungsseite sind die Integrale durch die Produkte aus Mittelwerten und Dauer $T_c$ der Mittelungs-Zeitspanne ausgedrückt (Mittelwerte werden durch Überstreichen des Formelzeichens gekennzeichnet). In Fig. 2 ist als gestrichelte Kurve der Verlauf der Größe

$$\int_0^{\tau_\nu T_c} \frac{e_{mM'}}{E_{d\nu}} d\frac{\tau_\nu}{T_c} = \frac{1}{E_{d\nu} \bullet T_c} \bullet \int_{(\nu-1)T_c}^{t} e_{mM'} dt$$

mit

$$E_{d\nu} = E_d(\tau_\nu) \approx E_d(\nu - 1) = \text{konst.}$$

eingetragen. Für $t_\nu = \nu \bullet T_c$ ergibt sich der Endwert $\text{sign} X_{m\nu} \bullet [1 - 2 \bullet |X_{m\nu}|]$. Folglich gilt für den Mittelwert der bezogenen Spannung $e_{mM'}/E_d$:

$$\frac{1}{E_{d\nu} \bullet T_c} \int_{(\nu-1) \bullet T_c}^{\nu \bullet T_c} e_{mM'} dt = \left[1 - 2 \bullet |X_{m\nu}|\right] \bullet \text{sign} X_{m\nu} = w_{m\nu} \qquad (4)$$

mit $w_{m\nu}$ = Pulsweitenfaktor = zeitlicher Mittelwert der auf die halbe Gleichspannung normierten Spannungen zwischen den Maschinenschlüssen a, b, c und dem Mittelpotentialpunkt M'. d.h. $w_{a\nu}$, $w_{b\nu}$, $w_{c\nu}$.

Im Ergebnis führt es zu keinen merkbaren Fehlern, wenn man Änderungen der Gleichspannung $2E_d$ in der betrachteten kurzen Zeit $T_c$ ebenso vernachlässigt wie die aller anderen Modellparameter, die in Fig. 1 eingetragen sind. Obwohl sich bei höheren Ständerfrequenzen $\underset{\rightarrow S}{i}(\tau_\nu)$ innerhalb von $\Delta\tau_\nu = T_c$ erheblich ändern kann, ist es trotzdem generell zulässig, zur Berechnung von $\Delta\underset{\rightarrow\mu}{\Psi}(\nu)$ vereinfachend anzunehmen $\underset{\rightarrow S}{i}(\nu) = \underset{\rightarrow S}{i}(\nu-1)$, denn bei mittleren und hohen Frequenzen ist das Glied $R_{Sv} \cdot \underset{\rightarrow s}{i}(v)$ klein im Vergleich zu $\underset{\rightarrow s}{e}(v)$ und bei kleinen Ständerfrequenzen ändert sich $\underset{\rightarrow s}{i}(\tau_v)$ innerhalb von $\Delta\tau_v = T_c$ tatsächlich nur geringfügig. Die Formeln

$$\Delta \underset{\rightarrow\mu}{\Psi}(v) = T_c \bullet \left[ \underset{\rightarrow v}{w} \bullet E_d(v-1) - R_{Sv} \bullet \underset{\rightarrow s}{i}(v-1) \right]$$
$$\underset{\rightarrow\mu}{\Psi}(v) = \underset{\rightarrow\mu}{\Psi}(v-1) + \Delta \underset{\rightarrow\mu}{\Psi}(v) \qquad\qquad (5)$$

gestatten deshalb im gesamten Betriebsbereich eine genaue fortlaufende numerische Bestimmung des Raumzeigers der Ständerflußverkettungen. Der Raumzeiger $\underset{\sim}{w}$ aus den zeitlichen Mittelwerten $w_{av}$, $w_{bv}$, $w_{cv}$ ist dabei entsprechend Gleichung (1) in jedem Berechnungsspiel aus den drei durch die Gleichungen (3;4) definierten Stranggrößen neu zu bilden.

Wie Figur 1 zeigt, bildet der Raumzeiger $\underset{\sim}{\Psi}$ die Eingangsgröße zur Bestimmung der Rotorgrößen. Die Betrachtung von diskreten Berechnungsspielen der Dauer $T_c$ bringt es mit sich, daß nicht die Größe $\underset{\sim}{\Psi}(v-1)$ direkt als korrekte Eingangsgröße verwendet werden kann, dazu muß vielmehr der über die Zeitspanne $\Delta\tau_v = T_c$ gebildete Mittelwert

$$\underset{\rightarrow\mu}{\bar\Psi}(v) = \underset{\rightarrow\mu}{\Psi}(v-1) + \Delta \underset{\rightarrow\mu}{\bar\Psi}(v)$$

genommen werden.

Dazu muß zunächst der zeitliche Mittelwert der in Fig. 2 gestrichelt dargestellten Integralfunktion bestimmt werden. Das Ergebnis ist

$$\frac{1}{E_{dv} \bullet T_c} \left\{ \overline{\int_{(v-1)\bullet T_c}^{t} e_{mM} \, dt} \right\} = signX'_{mv} \bullet \left[ 0.5 - X'^2_{mv} \right] = \overline{\int w'_{mv}} \qquad\qquad (6)$$

Bildet man aus den drei Stranggrößen $\overline{\int w_{mv}}$ (zeitliche Mittelwerte der Integrale über die drei auf die halbe Gleichspannung normierten Spannungen zwischen den Maschinenanschlüssen a, b, c und dem Mittelpotentialpunkt M') gemäß Gleichung (1) den Raumzeiger $\overline{\int w}$ aus den zeitlichen Mittelwerten der Integrale so gilt:

$$\left\{ \overline{\int_{(v-1)\bullet T_c}^{t} \underset{\rightarrow s}{e} \bullet dt} \right\} = T_c \bullet E_{dv} \bullet \overline{\int \underset{\rightarrow v}{w}}$$

Die Näherung $\underset{\sim}{i}(v) = \underset{\rightarrow s}{i}(v-1)$ führt weiterhin zu keinem merklichen Fehler beim Ergebnis, somit gilt:

$$\underset{\rightarrow\mu}{\bar\Psi}(v) = T_c \bullet \left[ \overline{\int \underset{\rightarrow v}{w}} \bullet E_d(v-1) - \frac{1}{2} \bullet R_{sv} \bullet \underset{\rightarrow s}{i}(v-1) \right] + \underset{\rightarrow\mu}{\Psi}(v-1) \qquad\qquad (7)$$

Für den in Fig. 1 eingetragenen Raumzeiger $\underset{\sim}{\psi}$ der Spannungen, die durch die Rotorflußverkettungen induziert werden, gilt:

$$\dot{\underset{\to r}{\Psi}} = R_r \bullet \underset{\to r}{i} + j \bullet \omega \bullet \underset{\to r}{\Psi} = \frac{R_r}{L_\sigma} \underset{\to \sigma}{\Psi} + j \bullet \omega \bullet \underset{\to r}{\Psi}$$

$$\text{mit } \frac{L_\sigma}{R_r} = T_\sigma = \frac{1}{\omega_\sigma} \text{ ;}$$

$$\underset{\to \sigma}{\Psi} = \underset{\to \mu}{\Psi} - \underset{\to r}{\Psi}$$

Nach Integration über die Dauer $T_c$ des $\nu$-ten Berechnungsspiels erhält man für die resultierende Flußänderung $\Delta \underset{\to r}{\Psi} (\nu)$ bei $\omega(\tau_\nu) \approx \omega(\nu - 1) =$ konst. :

$$\Delta \underset{\to r}{\Psi}(\nu) = \omega_{\sigma\nu} \bullet T_c \bullet \underset{\to \mu}{\bar{\Psi}}(\nu) + \left[ -\omega_{\sigma\nu} \div j \bullet \omega (\nu - 1) \right] \bullet T_c \bullet \underset{\to r}{\bar{\Psi}}(\nu)$$

Unter stationären Betriebsbedingungen bewegt sich die Spitze des komplexen Rotorflußraumzeigers, wie in Fig. 3 dargestellt, auf einer Kreisbahn mit der Konstanten Winkelgeschwindigkeit

$$\bar{\omega}_r^s(\nu) = \omega_r^s(\nu - 1)$$

Während der Zeitdauer $T_c$ des $\nu$-ten Berechnungsspiels ergibt sich der Drehwinkel

$$2 \bullet \varepsilon_\nu = \bar{\omega}_r^s(\nu) \bullet T_c = \bar{\omega}_r^s(\nu-1) \bullet T_c \qquad\qquad (8)$$

Bildet man aus allen Augenblickswerten, die der Rotorflußraumzeiger bei der Drehung um den Winkel $2\varepsilon_\nu$ annimmt, den zeitlichen Mittelwert, so erhält man die zur genauen Berechnung von $\underset{\to r}{\Psi}(\nu)$ benötigte Größe $\underset{\to r}{\bar\Psi}(\nu)$. Das Ergebnis ist darstellbar als

$$\underset{\to r}{\bar{\Psi}}(\nu) = \underset{-}{F}(\varepsilon_\nu) \bullet \underset{\to r}{\Psi}(\nu - 1) \text{ ;} \qquad \underset{-}{F}(\varepsilon_\nu) = \frac{\sin \varepsilon_\nu}{\varepsilon_\nu} \bullet e^{j \bullet \varepsilon_\nu} \qquad\qquad (9)$$

und anschaulich leicht zu deuten:
Bildet man zunächst immer aus zwei Raumzeigern, die symmetrisch zur Winkelhalbierenden des in Fig. 3 dargestellten Kreissektors liegen, ihren Mittelwertraumzeiger, so hat dieser in allen Fällen die Richtung der Winkelhalbierenden. Seinen Betrag erhält man durch Multiplikation des Betrages der beiden ursprünglichen Raumzeiger mit dem Cosinus vom halben Wert des von ihnen eingeschlossenen Winkels. Der Mittelwert aller so errechneten Beträge ist der einer Cosinus-Funktion im Argumentbereich $0 ... \varepsilon$ und ist bekanntlich gleich $\frac{\sin \varepsilon}{\varepsilon}$. Die durch Gleichung (9) definierte Funktion $\underset{-}{F}(\varepsilon_\nu)$ läßt sich nach bekannten Methoden in eine von Signalprozessoren schnell berechenbare Reihe von Potenzfunktionen entwickeln, die Zahl der Glieder richtet sich nach der geforderten Genauigkeit und dem bei der konkreten Antriebsaufgabe maximal auftretenden Argument $\varepsilon_\nu = \frac{1}{2}\omega_r^s \bullet T_c$.

Der Fehler der Taylor-Näherung

$$\underline{F}\!\left(\varepsilon_{\nu}\right) \approx \left(1 - \frac{2}{3}\bullet\varepsilon_{\nu}^{2}\right) + j\bullet\left(\varepsilon_{\nu} - \frac{1}{3}\bullet\varepsilon_{\nu}^{3}\right) \qquad\qquad (9a)$$

liegt z.B. bei $\varepsilon_{\nu}=15°$ noch unter 1%o.

Das erfindungsgemäße Verfahren ermittelt unter stationären Bedingungen aus nach Gleichung (7) berechneten Eingangsgrößen die Rotorflußinkremente $\Delta\underline{\Psi}_{\rightarrow r}(\nu)$ praktisch fehlerfrei. Weil innerhalb der immer vergleichsweise kleinen Zeitspanne $T_c$ auch in dynamischen Betriebszuständen sich weder der Betrag des Rotorflußraumzeigers noch seine Winkelgeschwindigkeit merklich ändern, bleibt der Fehler bei der numerischen Rotorflußberechnung im Vergleich zu den bekannten Verfahren sehr klein, wenn erfindungsgemäß folgende Formel benutzt wird:

$$\Delta\underline{\Psi}_{\rightarrow r}(\nu) = \omega_{\sim\nu}\bullet T_{c}\bullet\underline{\Psi}_{\rightarrow u}(\nu) + \left[-\omega_{\sim\nu} - j\bullet\omega(\nu-1)\right]\bullet T_{c}\bullet\underline{F}\!\left(\varepsilon_{\nu}\right)\bullet\underline{\Psi}_{\rightarrow r}(\nu-1)$$

$$\underline{\Psi}_{\rightarrow r}(\nu) = \Delta\underline{\Psi}_{\rightarrow r}(\nu) + \underline{\Psi}_{\rightarrow r}(\nu-1) \qquad\qquad (10)$$

Für die Berechnung aller Größen des $\nu$-ten Berechnungsspiels werden erfindungsgemäß nur Eingangswerte benötigt, die dem Zeitpunkt $t_{\nu-1}$ zugeordnet sind und die zu Beginn der Durchrechnung des Motormodells alle bekannt sind.

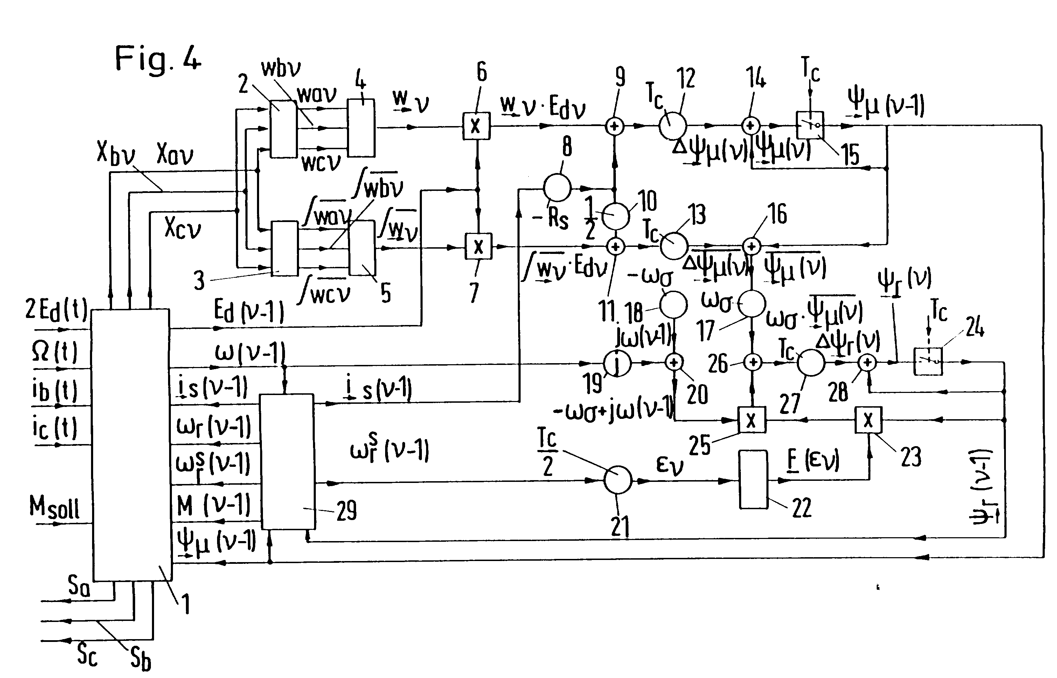

Anhand von Fig. 4 (unter Beachtung der Fig. 1 bis 3) wird der Ablauf noch einmal zusammenfassend verdeutlicht.

Prinzipiell laufen alle Berechnungsschritte in jedem Berechnungsspiel in einer einmal festgelegten Reihenfolge unverändert zyklisch ab. Man kann den Beginn des $\nu$-ten Berechnungsspiels z.B. durch den Vorgang definieren, daß von der Teilstruktur der Signalverarbeitung, die das Berechnen des nächsten Satzes von Modell-Zustandsgrößen besorgt, entsprechend Gleichung (4) aus den Variablen $X_{a\nu}$, $x_{b\nu}$, $x_{c\nu}$, die drei Pulsweitenfaktoren $w_{m\nu}$ berechnet werden, was in Fig. 4 durch den Rechner 2 symbolisiert wird.

Die drei Variablen $X_{m\nu}$ wurden im vorangegangenen Berechnungsspiel vom Rechner/Speicher 1 der Signalverarbeitung, der das Messen, Steuern und Regeln besorgt, berechnet und abgespeichert. Rechner 3 symbolisiert, daß anschließend aus den gleichen Eingangsgrößen $X_{m\nu}$ der Satz der Größen $\overline{j\,w_{m\nu}}$ entsprechend Gleichung (6) berechnet wird. Gemäß Gleichung (1) werden dann jeweils aus den Stranggrößen die zugeordneten Raumzeiger, dargestellt durch orthogonale $\alpha$-$\beta$-Koordinaten, berechnet, was durch die Rechner 4 und 5 symbolisiert wird. Nach Multiplikation mit dem im vorangegangenen Berechnungsspiel ermittelten Meßwert $E_{d\nu}=E_d(\nu-1)$, symbolisiert durch die Multiplizierer 6 und 7, erhält man die ersten Glieder in den Klammern der Gleichung (5) und (7). Die zweiten Glieder ergeben sich durch Multiplikation des im vorangegangenen Berechnungspiel ermittelten und gespeicherten Stromraumzeigers $\underline{i}_{\rightarrow s}(\nu-1)$ mit dem Parameter $-R_{s\nu}$, was durch den Multiplizierer 8 symbolisiert wird. Durch den Koeffizientenblock 10 wird symbolisch die Multiplikation mit dem Faktor ½ in der Klammer von Gleichung (7) berücksichtigt. Die Addierer 9 und 11 symbolisieren die Bildung der Klammerausdrücke in den Gleichungen (5) und (7), durch die Multiplizierer 12 und 13 wird symbolisch die Multiplikation mit der Konstanten $T_c$ berücksichtigt. Gemäß den Gleichungen (5) und (7) ist zu den auf diese Weise berechneten Raumzeigern $\Delta\underline{\Psi}_{\rightarrow u}(\nu)$ und $\Delta\underline{\Psi}_{\rightarrow u}(\nu)$ der Raumzeigerwert $\underline{\Psi}_{\rightarrow u}(\nu-1)$, hinzuzufügen.

Dieser wurde im vorangegangenen Berechnungsspiel ermittelt und gespeichert, was durch den Abtast-Halte-Block 15 symbolisiert wird. Durch die Addierer 14 und 16 wird symbolisiert, daß durch Addition der alten Zustandswerte und der neuen Inkremente die neuen Raumzeiger $\underline{\Psi}_{\rightarrow u}(\nu)$ bzw. $\underline{\Psi}_{\rightarrow u}(\nu)$ entsprechend den Gleichungen (5) und (7) gebildet werden. Der Multiplizierer 17 symbolisiert die Multiplikation von $\underline{\Psi}_{\rightarrow u}(\nu)$ mit dem Parameter $\omega_{\sigma\nu}$. Bevor das Ergebnis gemäß Gleichung (10) weiterverwendet wird muß zunächst aus den reellen Größen $\omega_{\sigma\nu}$ und $\omega(\nu-1)$ die komplexe Größe $[-\omega_{\sigma\nu} + j\bullet\omega(\nu-1)]$ gebildet werden, was durch die Multiplizierer 18, 19 und den Addierer 20 symbolisiert wird. Multiplizierer 21 und Rechner 22 symbolisieren, wie aus der im vorangegangenen Berechnungsspiel im Rechner/Speicher 29 gemäß Gleichung (2) berechneten und gespeicherten Größe $\omega_r^s(\nu-1)$ gemäß den Gleichungen (8) und (9a) der komplexe Wert $\underline{F}(\varepsilon_{\nu})$ sukzessiv berechnet wird.

Multiplizierer 23 symbolisiert die nachfolgende Multiplikation mit dem im vorangegangenen Berechnungsspiel ermittelten und gespeicherten Raumzeigerwert $\underline{\Psi}_{\rightarrow r}(\nu-1)$, was durch den AbtastHalteblock 24 symbolisch dargestellt wird. Gemäß Gleichung (10) wird das symbolisch am Ausgang des Multiplizierers 23 verfügbare Zwischenergebnis noch einmal, symbolisiert durch den Multiplizierer 25, mit der zuvor gebildeten Summe $[-\omega_{\sigma\nu}+j\bullet\omega(\nu-1)]$ multipliziert. Der

Addierer 26 symbolisiert die nachfolgende Addition mit der zuvor gebildeten Größe $\omega_{\sigma\nu} \cdot \underline{\Psi}_\mu(\nu)$ und der Multiplizierer 27 die gemäß Gleichung (10) erforderliche Multiplikation mit der Konstanten $T_c$. Der Addierer 28 symbolisiert schlußendlich, wie durch Addition der neuen Inkremente $\Delta\underline{\Psi}_r(\nu)$ zur alten Zustandsgröße $\underline{\Psi}_r(\nu-1)$ die gesuchte, neue Zustandsgröße $\underline{\Psi}_r(\nu)$ gebildet wird. Anschließend werden die neuen Zustandsgrößen $\underline{\Psi}_\mu(\nu)$ und $\underline{\Psi}_r(\nu)$ gespeichert, symbolisiert durch einen Abtast-Halte-Vorgang der Blöcke 15 und 24.

Nachdem im Rechner/Speicher 1 zum Messen, Steuern und Regeln die neue Winkelgeschwindigkeit $\omega(\nu)$ ermittelt ist, können alle Operationen der Gleichung (2) sukzessiv gerechnet werden, die Ergebnisse sind die Modell-Betriebsgrößen für den Zeitpunkt $t_\nu = \nu \cdot T_c$. Im Rechner/Speicher 29, der dies symbolisiert, wird auch die Speicherung dieser Größen veranlaßt. Sie stehen somit zum Vergleich mit den neuesten Soll- und Motor-Ist-Werten zur Verfügung, auf dieser Basis wird im Rechner/Speicher 1 zum Messen, Steuern und Regeln ein neuer Satz von Variablen $X_{m(\nu+1)}$ und zugeordneten Schaltsignalen $S_a$, $S_b$, $S_c$ generiert. Dieses muß vor dem Zeitpunkt $t_\nu = \nu \cdot T_c$ beendet sein, damit ohne Kausalitätsprobleme dann ein neues Berechnungsspiel beginnen kann.

Verzeichnis der verwendeten Formelzeichen

Indizes:

| | |
|---|---|
| $m = a\ ;b\ ;c$ : | Namen der drei Stränge eines dreiphasigen Systems = Motoranschlüsse, Maschinenanschlüsse |
| $\bar{X}$ : | Mittelwert der Größe x |
| $\underline{x}$ : | Raumzeiger der Größe x |
| $\underline{x}^*$ : | Konjugiert komplexer Wert des Raumzeigers X |
| $X_{\alpha a}$, $X_{\beta a}$ : | orthogonale Komponenten des Raumzeigers der Größe x |
| $X_a$, $X_b$, $X_c$ : | Strangwerte des dreiphasigen Systems der Größe x |
| $x_m$ : | einer der drei Strangwerte des dreiphasigen Systems der Größe x |
| $\dot{X}$ : | Ableitung der Größe x |
| $X$ : | Spitzenwert der Größe x |
| $\underline{X}$ : | komplexer Wert der Größe x |
| $\nu$ : | Ordnungszahl zur Kennzeichnung des $\nu$-ten Berechnungsspiels |
| $x_{soll}$ : | Sollwert der Größe x |

Schreibweisen:

| | |
|---|---|
| $|X|$ : | Betrag der Größe x |
| $\Delta X$ : | Änderung der Größe x = Inkrement |
| $X(\nu)$ : | Wert der Größe x zum Zeitpunkt $\nu \cdot T_c$ |
| $X_\nu$ : | Wert der Größe x für das $\nu$-te Be-rech-nungsspiel |
| $\int X$ : | Integral der Größe x |
| sign x : | Vorzeichen der Größe x |
| $j = \sqrt{-1}$ : | imaginäre Einheit |

Größen:

| | |
|---|---|
| M : | Drehmoment = inneres Moment pro Polpaar |
| $\Psi_\mu$ : | Ständerfluß |
| $\Psi_r$ : | Rotorfluß |
| $\Psi_\sigma$ : | Streufluß |
| $\Psi_{\mu a}$, $\Psi_{\mu b}$, $\Psi_{\mu c}$ : | Sternpunkt-Ständerflußverkettungen |
| $i_s$ : | Ständerstrom |
| $i_r$ : | Rotorstrom |
| $i_a$, $i_b$, $i_c$ : | Strangströme, Ständerströme |
| $L_\mu$ : | Hauptinduktivität |
| $L_\sigma$ : | Streuinduktivität |
| $R_s$ : | Ständerwiderstand |
| $R_r$ : | Rotorwiderstand |
| $T_\sigma$ : | Streuzeitkonstante |
| $\omega$ : | elektromagnetische Winkelgeschwindigkeit des Rotors relativ zum Ständer = mit der Polpaarzahl multiplizierte mechanische Winkelgeschwindigkeit |
| $\omega_r$ : | Schlupf-Kreisfrequenz |

$\omega_r^s$ :     Winkelgeschwindigkeit des Rotorflußraumzeigers im ständerfesten Bezugssystem

$\omega_\sigma$ :     Kehrwert der rotorseitigen Streuzeitkonstanten

$\Omega$ :     mechanische Winkelgeschwindigkeit des Rotors relativ zum Stator

e :     Spannung

$e_s$ :     Ständerspannung

$e_{mM}'$ :     Wechselrichterspannung zwischen m=a,b,c und M'

$E_d$ :     halbe Zwischenkreisspannung

t :     Zeit, Zeitpunkt

$T_c$ :     Berechnungsspieldauer

$\tau_\nu$ :     Zeitvariable für das $\nu$-te Berechnungsspiel

$\tau_{\nu Sm}$ :     Zeitpunkt des Potentialwechsels am Anschluß m im $\nu$-ten Berechnungsspiel

w :     Pulsweitenfaktor

$x_m$ :     Rechengröße (Variable) zur Bestimmung der Mittelwerte der auf $E_d$ bezogenen Wechselrichterspannung $e_{mM}'$ und ihres Zeitintegrals

$\varepsilon_\nu$ :     halber Wert der Winkeldrehung des Rotorflußraumzeigers während des $\nu$-ten Berechnungsspiels im statorfesten Bezugssystem

$S_m$ :     Schaltsignal für den Strang m des Wechselrichters

F :     Faktor, Funktion

Bezugsziffern/Bezugszeichen

1     Rechner/Speicher
2     Rechner
3     Rechner
4     Rechner
5     Rechner
6     Multiplizierer
7     Multiplizierer
8     Multiplizierer
9     Addierer
10     Multiplizierer
11     Addierer
12     Multiplizierer
13     Multiplizierer
14     Addierer
15     Abtast-Halte-Block
16     Addierer
17     Multiplizierer
18     Multiplizierer (Koeffizientenblock)
19     Multiplizierer
20     Addierer
21     Multiplizierer
22     Rechner
23     Multiplizierer
24     Abtast-Halte-Block
25     Multiplizierer
26     Addierer
27     Multiplizierer
28     Addierer
29     Rechner/Speicher

SR     Stromrichter
IMA     Induktionsmaschine
M'     Mittenpotentialpunkt der Eingangsgleichspannung
Va,Vb,Vc     Umschaltgeräte

**Patentansprüche**

1. Verfahren zur Echtzeitberechnung eines Modells für über Wechselrichter gespeiste Induktionsmaschinen mit Darstellung der Zustandsgrößen durch jeweils zwei orthogonale Koordinaten im ständerfesten Bezugssystem innerhalb von sich ständig wiederholenden Berechnungsspielen einer konstanten Dauer ($T_c$), dadurch gekennzeichnet, daß zusätzlich zu den Werten der Zustandsgrößen, die an den Zeitpunkten auftreten, welche die Berechnungsspiele trennen, auch die Mittelwerte der Zustandsgrößen über die Berechnungsspieldauer gebildet und berechnet werden und daß aus diesen Mittelwerten der Koordinaten von Ständerfluß und Rotorfluß die Inkremente der Koordinaten vom Rotorfluß berechnet werden, die nach Addition zu den Koordinatenwerten, die dem Anfangszeitpunkt eines Berechnungsspiels zugeordnet sind, die Koordinaten vom Rotorfluß ergeben, die dem Endzeitpunkt des Berechnungsspiels zugeordnet sind, entsprechend der bei Raumzeigerdarstellung gültigen Beziehung

$$\underset{\to r}{\Psi}(\nu) = \underset{\to r}{\Psi}(\nu-1) + \left[-\omega_{\sigma\nu} + j\omega(\nu-1)\right] \bullet T_c \bullet \underset{\to r}{\bar{\Psi}}(\nu) + \omega_{\sigma\nu} \bullet T_c \bullet \underset{\to \mu}{\bar{\Psi}}(\nu)$$

mit

| | |
|---|---|
| $\nu =$ | Ordnungszahl zur Kennzeichnung des $\nu$-ten Berechnungsspiels; |
| $\underset{\to r}{\Psi}(\nu) =$ | Wert des Rotorflußraumzeigers am Ende des $\nu$-ten Berechnungsspiels; |
| $\underset{\to r}{\Psi}(\nu-1) =$ | Wert des Rotorflußraumzeigers am Anfang des $\nu$-ten Berechnungsspiels; |
| $\underset{\to r}{\bar{\Psi}}(\nu) =$ | Mittelwert des Rotorflußraumzeigers im $\nu$-ten Berechnungsspiel; |
| $\underset{\to \mu}{\bar{\Psi}}(\nu) =$ | Mittelwert des Ständerflußraumzeigers im $\nu$-ten Berechnungsspiel; |
| $\omega_{\sigma\nu} =$ | Kehrwert der rotorseitigen Streuzeitkonstanten für das $\nu$-te Berechnungsspiel; |
| $\omega(\nu-1) =$ | mit der Polpaarzahl multiplizierte mechanische Winkelgeschwindigkeit am Anfang des $\nu$-ten Berechnungsspiels; |
| $T_c =$ | Berechnungsspieldauer; |
| $j = \sqrt{-1} =$ | imaginäre Einheit. |

2. Verfahren nach Anspruch 1, dadurch gekennzeichnet, daß als Mittelwert des Rotorflußraumzeigers

$$\left(\underset{\to r}{\bar{\Psi}}(\nu)\right)$$

im $\nu$-ten Berechnungsspiel der Wert verwendet wird, der sich ergibt, wenn man den dem Anfangszeitpunkt des Berechnungsspiels zugeordneten Wert

$$\left(\underset{\to r}{\Psi}(\nu-1)\right)$$

mit einem komplexen Faktor $\underline{F}(\varepsilon_\nu)$ multipliziert, der nach folgender Gleichung berechnet wird:

$$\underline{F}(\varepsilon_\nu) = \frac{\sin \varepsilon_\nu}{\varepsilon_\nu} \bullet e^{j\varepsilon_\nu} \approx \left(1 - \tfrac{2}{3}\varepsilon_\nu^2\right) + j\left(\varepsilon_\nu - \tfrac{1}{3}\varepsilon_\nu^3\right)$$

mit
$\varepsilon_\nu =$ halber Wert der Winkeldrehung des Rotorflußraumzeigers während des $\nu$-ten Berechnungsspiels im statorfesten Bezugssystem.

3. Verfahren nach Anspruch 2, dadurch gekennzeichnet, daß der halbe Wert der Winkeldrehung des Rotorflußraumzeigers ($\varepsilon_\nu$) durch Multiplikation der halben Berechnungsspieldauer ($T_c$) mit der Winkelgeschwindigkeit

$$\left(\omega\,_r^s\!\left(\nu-1\right)\right)$$

des Rotorflußraumzeigers, die dem Anfangszeitpunkt des ν-ten Berechnungsspiels im statorfesten Bezugssystem zugeordnet ist, berechnet wird, wobei diese Winkelgeschwindigkeit aus der Summe aus der mit der Polpaarzahl multiplizierten mechanischen Winkelgeschwindigkeit

$$\left(\omega\!\left(\nu-1\right)\right)$$

und dem dem Anfangszeitpunkt des ν-ten BerechnungsSpiels zugeordneten Wert

$$\left(\omega\,_r\!\left(\nu-1\right)\right)$$

der Kreisfrequenz der elektromagnetischen Rotorgrößen gebildet wird, die sich aus der folgenden Formel berechnet

$$\omega\,_r\!\left(\nu-1\right)=R_{r\nu}\bullet\frac{\mathrm{Im}\!\left[\underset{\rightarrow\mu}{\Psi}^{\!*}\!\left(\nu-1\right)\bullet\underset{\rightarrow s}{i}\!\left(\nu-1\right)\right]}{\mathrm{Re}\!\left[\underset{\rightarrow r}{\Psi}^{\!*}\!\left(\nu-1\right)\bullet\underset{\rightarrow r}{\Psi}\!\left(\nu-1\right)\right]}$$

mit

$R_{r\nu}$ =     Wert des Rotor-Ersatzwiderstandes für das ν-te Berechnungsspiel;
$\underset{\rightarrow\mu}{\Psi}^{\!*}(\nu$ - 1) =     Konjugiert komplexer Wert des Ständerflußraumzeigers am Anfang des ν-ten Berechnungspiels;
$\underset{\rightarrow r}{\Psi}(\nu$- 1) =     Wert des Rotorflußraumzeigers am Anfang des ν-ten Berechnungsspiels;
$\underset{\rightarrow s}{i}(\nu$ - 1) =     Wert des Ständerstromraumzeigers am Anfang des ν-ten Berechnungsspiels.

**4.**  Verfahren nach einem der Ansprüche 1 bis 3, dadurch gekennzeichnet, daß zur Berechnung des Mittelwerts

$$\left(\underset{\rightarrow\mu}{\bar{\Psi}}(\nu)\right)$$

vom Ständerflußraumzeiger die Zeitverläufe der auf die halbe Gleichspannung ($E_d$) normierten Spannungen zwischen den Maschinenanschlüssen (a, b, c) und dem Mittelpotentialpunkt (M') der Gleichspannung am Eingang des Wechselrichters für den Zeitraum eines jeden Berechnungsspiels durch drei Variablen $X_{a\nu}$, $X_{b\nu}$, $X_{c\nu}$ beschrieben werden, deren Vorzeichen mit dem Vorzeichen der zugeordneten Spannung am Anfangszeitpunkt des Berechnungsspiels übereinstimmt und deren Betrag sich dadurch ergibt, daß man die Zeitspanne zwischen einem Wechsel des Potentials am zugeordneten Maschinenanschluß und dem Ende des Berechnungsspiels auf die Dauer ($T_c$) des Berechnungsspiels normiert.

**5.**  Verfahren nach Anspruch 4, dadurch gekennzeichnet, daß zur Berechnung des Mittelwerts

$$\left(\underset{\rightarrow\mu}{\bar{\Psi}}(\nu)\right)$$

vom Ständerflußraumzeiger für jedes Berechnungsspiel ein Raumzeiger

EP 0 746 091 B1

$$\left( \overline{\underset{\rightarrow}{\int w_v}} \right)$$

aus den zeitlichen Mittelwerten der Integrale über die drei auf die halbe Gleichspannung normierten Spannungen zwischen den Maschinenanschlüssen (a, b, c) und dem Mittelpotentialpunkt (M') gebildet wird, wobei die drei Mittelwerte der Integrale $\overline{\int w_{mv}}$ nach folgender Gleichung berechnet werden:

$$\overline{\int w}_{mv} = \mathrm{sign}[X_{mv}] \bullet \left[0,5 - X_{mv}^2\right]$$

mit

m = a; b; c

sign[$X_m v$] = Vorzeichen der Variablen $X_{mv}$, d.h. $X_{av}$, $X_{bv}$, $X_{cv}$

6. Verfahren nach Anspruch 5, dadurch gekennzeichnet, daß der Mittelwert $\overline{\underset{\rightarrow\mu}{\Psi}}(v)$ vom Ständerflußraumzeiger für jedes Berechnungsspiel nach folgender Gleichung berechnet wird:

$$\overline{\underset{\rightarrow\mu}{\Psi}}(v) = \underset{\rightarrow\mu}{\Psi}(v-1) + \left[\overline{\underset{\rightarrow}{\int w}_v} \bullet E_{dv} - \frac{1}{2} \bullet \overline{\underset{\rightarrow}{R_{sv} \bullet i_s}}(v)\right] \bullet T_c$$

mit

$\underset{\rightarrow\mu}{\Psi}(v-1)$ = Wert des Ständerflußraumzeigers am Anfang des $v$-ten Berechnungsspiels;

$E_{dv}$ = Wert der halben Gleichspannung für das $v$-te Berechnungsspiel;

$\overline{\underset{\rightarrow}{\int w_v}}$ = Raumzeiger der Mittelwerte der Integrale über die normierten Spannungen der Maschinenanschlüsse im $v$-ten Berechnungsspiel;

$\overline{\underset{\rightarrow}{R_{sv} \bullet i_s}}(v)$ = Mittelwert des Raumzeigers aller inneren Spannungsabfälle des Wechselrichters und der Ständerwicklung im $v$-ten Berechnungsspiel.

7. Verfahren nach Anspruch 6, dadurch gekennzeichnet, daß zur Berechnung eines Inkrements $\Delta\underset{\rightarrow\mu}{\Psi}(v)$ vom Wert des Ständerflußraumzeigers am Anfang des $v$-ten Berechnungsspiels zum Wert am Ende dieses Berechnungsspiels zunächst ein Raumzeiger ($\underset{\rightarrow}{w}$) aus den zeitlichen Mittelwerten ($w_{av}$, $w_{bv}$, $w_{cv}$) der auf die halbe Gleichspannung normierten Spannungen zwischen den Maschinenanschlüssen und dem Mittelpotentialpunkt (M') gebildet wird, wobei die drei Mittelwerte $w_{mv}$ nach folgender Gleichung berechnet werden:

$$w_{mv} = \mathrm{sign}[X_{mv}] \bullet [1-2 \bullet |X_{mv}|]$$

8. Verfahren nach Anspruch 7, dadurch gekennzeichnet, daß das Inkrement des Ständerflußraumzeigers $\Delta\underset{\rightarrow\mu}{\Psi}(v)$ zwischen dem Anfang und dem Ende des $v$-ten Berechnungsspiels nach folgender Gleichung berechnet wird:

$$\Delta\underset{\rightarrow\mu}{\Psi}(v) = \left[\underset{\rightarrow v}{w} \bullet E_{dv} - \overline{\underset{\rightarrow}{R_{sv} \bullet i_s}}(v)\right] \bullet T_c$$

mit $\underset{\rightarrow v}{w}$ = Raumzeiger der Mittelwerte der normierten Spannungen der Maschinenanschlüsse im $v$-ten Berechnungsspiel.

9. Verfahren nach einem der Ansprüche 1 bis 8, dadurch gekennzeichnet, daß zur vereinfachten Berechnung des

**15**

zeitlichen Mittelwerts des Raumzeigers der inneren Spannungsabfälle der Ständerwicklung der für das ν-te Berechnungsspiel aktuelle Sternpunkt-Ersatzwiderstand ($R_{sv}$) der Ständerwicklung mit dem Mittelwert

$$\left(\overline{\underset{\rightarrow s}{i}}(\nu)\right)$$

des Ständerstromraumzeigers multipliziert wird, der sich ergibt, wenn man den Wert

$$\left(\underset{\rightarrow s}{i}(\nu-1)\right)$$

des Stromraumzeigers, der dem Anfangszeitpunkt des ν-ten Berechnungsspiels zugeordnet ist, mit dem komplexen Faktor $\underline{F}(\varepsilon_\nu)$ multipliziert, der nach folgender Gleichung berechnet wird:

$$\underline{F}(\varepsilon_\nu) = \frac{\sin\varepsilon_\nu}{\varepsilon_\nu} \bullet e^{j\varepsilon_\nu} \approx \left(1 - \tfrac{2}{3}\varepsilon_\nu^2\right) + j\left(\varepsilon_\nu - \tfrac{1}{3}\varepsilon_\nu^3\right)$$

**10.** Verfahren nach Anspruch 9, dadurch gekennzeichnet, daß der Faktor $\underline{F}(\varepsilon_\nu)$ durch den Wert eins angenähert wird.

## Claims

**1.** Method for real-time calculation of a model for induction machines fed via invertors, having representation of the state variables, by means of in each case two orthogonal coordinates in the reference system fixed in the stator, within continuously repeating computing cycles of constant duration ($T_c$), characterized in that in addition to the values of the state variables which occur at the instants which separate the computing cycles, the mean values of the state variables over the duration of the computing cycle are also formed and calculated, and in that there are calculated from these mean values of the coordinates of stator flux and rotor flux the increments of the coordinates of the rotor flux which, after addition to the coordinate values which are assigned to the initial instant of a computing cycle, yield the coordinates of the rotor flux, which are assigned to the final instant of the computing cycle, in accordance with the following relationship, which is valid in the case of space vector representation

$$\underset{\rightarrow r}{\Psi}(\nu) = \underset{\rightarrow r}{\Psi}(\nu-1) + \left[-\omega_{\sigma\nu} + j\omega(\nu-1)\right] \bullet T_c \bullet \underset{\rightarrow r}{\overline{\Psi}}(\nu) + \omega_{\sigma\nu} \bullet T_c \bullet \underset{\rightarrow\mu}{\overline{\Psi}}(\nu)$$

where

| | |
|---|---|
| $\nu$ = | ordinal number for identifying the ν-th computing cycle; |
| $\underset{\rightarrow r}{\Psi}(\nu)$ = | value of the rotor flux space vector at the end of the ν-th computing cycle; |
| $\underset{\rightarrow r}{\Psi}(\nu-1)$ = | value of the rotor flux space vector at the start of the ν-th computing cycle; |
| $\underset{\rightarrow r}{\overline{\Psi}}(\nu)$ = | mean value of the rotor flux space vector in the ν-th computing cycle; |
| $\underset{\rightarrow}{\overline{\Psi}}(\nu)$ = | mean value of the stator flux space vector in the ν-th computing cycle; |
| $\omega_{\sigma\nu}$ = | reciprocal of the rotor-side scattering time constant for the ν-th computing cycle; |
| $\omega(\nu-1)$ = | mechanical angular velocity, multiplied by the number of pole pairs, at the start of the ν-th computing cycle; |
| $T_c$ = | duration of the computing cycle; and |
| $j = \sqrt{-1}$ = | imaginary unit. |

**2.** Method according to Claim 1, characterized in that use is made as mean value of the rotor flux space vector

$$\left(\underset{\rightarrow r}{\bar{\Psi}}(v)\right)$$

in the $v$-th computing cycle of the value which results when the value

$$\left(\underset{\rightarrow r}{\Psi}(v-1)\right)$$

assigned to the initial instant of the computing cycle is multiplied by a complex factor $\underline{F}(\varepsilon_v)$ which is calculated according to the following equation:

$$\underline{F}(\varepsilon_v) = \frac{\sin \varepsilon_v}{\varepsilon_v} \bullet e^{j\varepsilon_v} \approx \left(1 - \tfrac{1}{3}\varepsilon_v^2\right) + j\left(\varepsilon_v - \tfrac{1}{3}\varepsilon_v^3\right)$$

where
$\varepsilon_v$ = half value of the angular rotation of the rotor flux space vector during the $v$-th computing cycle in the reference system fixed in the stator.

3. Method according to Claim 2, characterized in that the half value of the angular rotation of the rotor flux space vector ($\varepsilon_v$) is calculated by multiplying the half duration ($T_c$) of the computing cycle by the angular velocity ($\omega_r^s(v-1)$) of the rotor flux space vector which is assigned to the initial instant of the $v$-th computing cycle in the reference system fixed in the stator, this angular velocity being formed from the sum of the mechanical angular velocity ($\omega$ ($v-1$)) multiplied by the number of pole pairs and the value ($\omega_r(v-1)$), assigned to the initial instant of the $v$-th computing cycle, of the angular frequency of the electromagnetic rotor variables which is calculated from the following formula

$$\omega_r(v-1) = R_{rv} \bullet \frac{Im\left[\underset{\rightarrow \mu}{\Psi}^*(v-1) \bullet \underset{\rightarrow}{i}(v-1)\right]}{Re\left[\underset{\rightarrow r}{\Psi}^*(v-1) \bullet \underset{\rightarrow}{\Psi}_r(v-1)\right]}$$

where

$R_{rv}$ = value of the equivalent rotor resistance for the $v$-th computing cycle;
$\underset{\mu}{\Psi}^*(v-1)$ = complex conjugate value of the stator flux space vector at the start of the $v$-th computing cycle;
$\underset{r}{\Psi}(v-1)$ = value of the rotor flux space vector at the start of the $v$-th computing cycle; and
$\underset{}{i}(v-1)$ = value of the stator flux space vector at the start of the $v$-th computing cycle.

4. Method according to one of Claims 1 to 3, characterized in that for the purpose of calculating the mean value

$$\left(\underset{\rightarrow \mu}{\bar{\Psi}}(v)\right)$$

of the stator flux space vector the time characteristics of the voltages, normalized to half the DC voltage ($E_d$), between the machine terminals (a, b, c) and the mid-potential point (M') of the DC voltage at the input of the inverter are described for the period of each computing cycle by three variables $X_{av}$, $X_{bv}$, $X_{cv}$ whose sign corresponds to the sign of the assigned voltage at the initial instant of the computing cycle and whose modulus is yielded by normalizing the time interval between a change in the potential at the assigned machine terminal and the end of the computing cycle to the duration ($T_c$) of the computing cycle.

**5.** Method according to Claim 4, characterized in that for the purpose of calculating the mean value

$$\left(\underset{\rightarrow\mu}{\bar{\Psi}}(\nu)\right)$$

of the stator flux space vector for each computing cycle a space vector

$$\left(\overline{\int \underset{\rightarrow}{w}_\nu}\right)$$

is formed from the temporal mean values of the integrals over the three voltages, normalized to half the DC voltage, between the machine terminals (a, b, c) and the mid-potential point (M'), the three mean values of the integrals $\overline{\int w_m}$ being calculated according to the following equation:

$$\overline{\int w}_{m\nu} = \text{sign}\left[X_{m\nu}\right] \bullet \left[0{,}5 - X_{m\nu}^{\div}\right]$$

where

| | |
|---|---|
| m = | a; b; c |
| $\text{sign}[X_{m\nu}]$ = | sign of the variables $X_{m\nu}$, that is to say, $X_{a\nu}$, $X_{b\nu}$, $X_{c\nu}$ |

**6.** Method according to Claim 5, characterized in that the mean value $\underset{\rightarrow\mu}{\bar{\Psi}}(\nu)$ of the stator flux space vector is calculated for each computing cycle according to the folllowing equation:

$$\underset{\rightarrow\mu}{\bar{\Psi}}(\nu) = \underset{\rightarrow\mu}{\Psi}(\nu-1) + \left[\overline{\int \underset{\rightarrow}{w}_\nu} \bullet E_{d\nu} - \frac{\div}{\div} \bullet \overline{R_{s\nu} \bullet i_s}(\nu)\right] \bullet T_c$$

where

| | |
|---|---|
| $\underset{\rightarrow\mu}{\Psi}(\nu - 1)$ = | value of the stator flux space vector at the start of the $\nu$-th computing cycle; |
| $E_{d\nu}$ = | value of half the DC voltage for the $\nu$-th computing cycle; |
| $\overline{\int w_\nu}$ = | space vector of the mean values of the integrals over the normalized voltages of the machine terminals in the $\nu$-th computing cycle; |
| $\overline{R_{s\nu} \bullet i_s}(\nu)$ = | mean value of the space vector of all internal voltage drops of the invertor and the stator winding in the $\nu$-th computing cycle. |

**7.** Method according to Claim 6, characterized in that for the purpose of calculating an increment $\Delta\underset{\rightarrow}{\Psi}(\nu)$ of the value of the stator flux space vector at the start of the $\nu$-th computing cycle relative to the value at the end of this computing cycle, a space vector ($\underset{\rightarrow}{w}$) is firstly formed from the temporal mean values ($w_{a\nu}$, $w_{b\nu}$, $w_{c\nu}$) of the voltages, normalized to half the DC voltage, between the machine terminals and the mid-potential point (M'), the three mean values $w_{m\nu}$ being calculated according to the following equation:

$$w_{m\nu} = \text{sign}[X_{m\nu}] \bullet [1 - 2 \bullet |X_{m\nu}|]$$

**8.** Method according to Claim 7, characterized in that the increment of the stator flux space vector $\Delta\underset{\rightarrow\mu}{\Psi}(\nu)$ between the start and the end of the $\nu$-th computing cycle is calculated according to the following equation:

$$\Delta \underset{\rightarrow \mu}{\Psi}(\nu) = \left[\underset{\rightarrow \nu}{w} \bullet E_{d\nu} - \overline{R_{s\nu} \bullet i_{s}}(\nu)\right] \bullet T_{c}$$

where $\underset{\rightarrow \nu}{w}$ = space vector of the mean values of the normalized voltages of the machine terminals in the $\nu$-th computing cycle.

9. Method according to one of Claims 1 to 8, characterized in that for the purpose of simplified calculation of the temporal mean value of the space vector of the internal voltage drops of the stator winding, the starpoint equivalent resistance ($R_{S\nu}$), current for the $\nu$-th computing cycle, of the stator winding is multiplied by the mean value $(i_{s}(\nu))$ of the stator current space vector which results when the value $(i_{s}(\nu-1))$ of the current space vector which is assigned to the initial instant of the $\nu$-th computing cycle is multiplied by the complex factor $\underline{F}(\varepsilon_{\nu})$ which is calculated according to the following equation:

$$\underline{F}(\varepsilon_{\nu}) = \frac{\sin \varepsilon_{\nu}}{\varepsilon_{\nu}} \bullet e^{j\varepsilon_{\nu}} \approx \left(1 - \tfrac{2}{3}\varepsilon_{\nu}^{2}\right) + j\left(\varepsilon_{\nu} - \tfrac{1}{3}\varepsilon_{\nu}^{3}\right)$$

10. Method according to Claim 9, characterized in that the factor $\underline{F}(\varepsilon_{\nu})$ is approximated by the value of one.

**Revendications**

1. Procédé de calcul en temps réel d'un modèle pour machines d'induction alimentées par onduleur avec représentation des grandeurs d'état respectivement par deux coordonnées orthogonales dans le système de référence fixe par rapport au stator à l'intérieur de jeux de calcul se répétant constamment et présentant une durée constante ($T_{c}$), <u>caractérisé en ce que,</u> en plus des valeurs des grandeurs d'état qui apparaissent aux moments qui séparent les jeux de calcul, les valeurs moyennes des grandeurs d'état sont également formées et calculées pendant la durée du jeu de calcul, et en ce que, à partir de ces valeurs moyennes des coordonnées de flux de stator et de flux de rotor, les incréments des coordonnées du flux de rotor sont calculés, lesquels, après l'addition aux valeurs de coordonnées qui sont affectées au moment initial d'un jeu de calcul, donnent les coordonnées du flux de rotor qui sont affectées au moment final du jeu de calcul, selon la relation valide pour la représentation d'indicateur spatial

$$\underset{\rightarrow r}{\Psi}(\nu) = \underset{\rightarrow r}{\Psi}(\nu-1) - \left[-\omega_{\sigma\nu} + j\omega(\nu 1)\right] \bullet T_{c} \bullet \underset{\rightarrow r}{\bar{\Psi}}(\nu) + \omega_{\sigma\nu} \bullet T_{c} \bullet \underset{\rightarrow \mu}{\bar{\Psi}}(\nu)$$

où

| | |
|---|---|
| $\nu =$ | nombre ordinal caractérisant le vième, jeu de calcul; |
| $\underset{\rightarrow r}{\Psi}(\nu) =$ | valeur de l'indicateur spatial de flux de rotor à la fin du vième jeu de calcul; |
| $\underset{\rightarrow r}{\Psi}(\nu-1) =$ | valeur de l'indicateur spatial de flux de rotor au début du vième jeu de calcul; |
| $\underset{\rightarrow r}{\bar{\Psi}}(\nu) =$ | valeur moyenne de l'indicateur spatial de flux dans le vième jeu de calcul; |
| $\underset{\rightarrow \mu}{\bar{\Psi}}(\nu) =$ | valeur moyenne de l'indicateur spatial de flux de stator dans le vième jeu de calcul; |
| $\omega_{\sigma\nu} =$ | valeur inverse des constantes de temps de fuite côté rotor pour le vième jeu de calcul; |
| $\omega(\nu-1) =$ | vitesse angulaire mécanique multipliée par le nombre de paires polaires au début du vième jeu de calcul; |
| $T_{c} =$ | durée de jeu de calcul; |
| $j = \sqrt{-1} =$ | unité imaginaire. |

2. Procédé selon la revendication 1, caractérisé en ce que, comme valeur moyenne de l'indicateur spatial de flux de rotor $(\bar{\Psi}(\nu))$ dans le vième jeu de calcul, on utilise la valeur qui est obtenue quand on multiplie la valeur $(\Psi(\nu-1))$ affectée au moment initial du jeu de calcul par un facteur complexe $\underline{F}(\varepsilon_{\nu})$ qui est calculé selon l'équation suivante:

$$F(\varepsilon_v) = \frac{\sin \varepsilon_v}{\varepsilon_v} \bullet e^{j\varepsilon_v} \approx \left(1 - \tfrac{1}{3}\varepsilon_v^2\right) + j\left(\varepsilon_v - \tfrac{1}{3}\varepsilon_v^3\right)$$

où

$\varepsilon_v$ = demi-valeur de la rotation angulaire de l'indicateur spatial de flux de rotor pendant le vième jeu de calcul dans le système de référence fixe par rapport au stator.

3. Procédé selon la revendication 2, caractérisé en ce que la demi-valeur de la rotation angulaire de l'indicateur spatial de flux de rotor ($\varepsilon_v$) est calculée par la multiplication de la demi-durée de jeu de calcul ($T_c$) par la vitesse

$$\left(\omega_r'(v-1)\right)$$

de l'indicateur spatial de flux de rotor qui est affectée au moment initial du vième jeu de calcul dans le système de référence fixe par rapport au stator, à l'occasion de quoi cette vitesse angulaire est formée à partir de la somme issue de la vitesse angulaire mécanique ($\omega$ ($v$ - 1)), multipliée par le nombre de paires polaires, et de la valeur ($\omega_r$ ($v$ - 1)), affectée au moment initial du vième jeu de calcul, de la pulsation des grandeurs électromagnétiques de rotor qui est calculée à partir de la formule suivante

$$\omega_r(v-1) = R_{rv} \bullet \frac{\text{Im}\left[\underline{\Psi}_\mu^*(v-1) \bullet \underline{i}(v-1)\right]}{\text{Re}\left[\underline{\Psi}_r^*(v-1) \bullet \underline{\Psi}_r(v-1)\right]}$$

où

$R_{rv}$ = valeur de la résistance équivalente de rotor pour le vième jeu de calcul;
$\underline{\Psi}_\mu^*(v - 1)$ = valeur complexe conjuguée de l'indicateur spatial de flux de stator au début du vième jeu de calcul;
$\underline{\Psi}_r(v - 1)$ = valeur de l'indicateur spatial de flux de rotor au début du vième jeu de calcul;
$\underline{i}(v - 1)$ = valeur de l'indicateur spatial de flux de stator au début du vième jeu de calcul.

4. Procédé selon une des revendications 1 à 3, caractérisé en ce que, pour calculer la valeur moyenne $\left(\underline{\Psi}(v)\right)$ de l'indicateur spatial de flux de stator, les courbes temporelles des tensions, normalisées à la demi-tension continue ($E_d$), entre les connexions de machine (a, b, c) et le point de potentiel moyen (M') de la tension continue à l'entrée de l'onduleur pour la période de chaque jeu de calcul, sont décrites par trois variables $X_{av}$, $X_{bv}$, $X_{cv}$, dont le signe coïncide avec le signe de la tension affectée au moment initial du jeu de calcul et dont la valeur est obtenue en normalisant à la durée ($T_c$) du jeu de calcul la période de temps entre un changement du potentiel sur la connexion de machine affectée et la fin du jeu de calcul.

5. Procédé selon la revendication 4, caractérisé en ce que, pour calculer la valeur moyenne $\left(\underline{\Psi}(v)\right)$ de l'indicateur spatial de flux de stator, pour chaque jeu de calcul, un indicateur spatial $\left(\overline{\int w_v}\right)$, est formé à partir des valeurs moyennes temporelles des intégrales sur les trois tensions, normalisées à la demi-tension continue, entre les connexions de machine (a, b, c) et le point de potentiel moyen (M'), à l'occasion de quoi les trois valeurs moyennes des intégrales sont calculées selon l'équation suivante: $\left(\overline{\int w_{mv}}\right)$

$$\overline{\int w_{mv}} = \text{sign}\left[X_{mv}\right] \bullet \left[0.5 - X_{mv}^2\right]$$

où

m = a; b; c

sign [$X_{mv}$]= signe des variables $X_{mv}$, c'est-à-dire $X_{av}$, $X_{bv}$, $X_{cv}$.

6. Procédé selon la revendication 5, caractérisé en ce que la valeur moyenne $\bar{\Psi}_\mu(v)$ de l'indicateur spatial de flux de stator pour chaque jeu de calcul est calculée selon l'équation suivante:

$$\bar{\underset{\rightarrow \mu}{\Psi}}(v) = \underset{\rightarrow \mu}{\Psi}(v-1) + \left[ \overline{\int \underset{\rightarrow}{w_v}} \bullet E_{dv} - \tfrac{1}{2} \bullet \overline{R_{sv} \bullet i_s}(v) \right] \bullet T_c$$

où

$\underset{\rightarrow \mu}{\Psi}(v - 1)$ = valeur de l'indicateur spatial de flux de stator au début du vième jeu de calcul;

$E_{dv}$ = valeur de la demi-tension continue pour le vième jeu de calcul;

$\overline{\int w_v}$ = indicateur spatial des valeurs moyennes des intégrales sur les tensions normalisées des connexions de machine dans le vième jeu de calcul;

$\overline{R_{sv} \bullet i_s}(v)$ = valeur moyenne de l'indicateur spatial de toutes les chutes de tension internes de l'onduleur et de l'enroulement de stator dans le vième jeu de calcul.

7. Procédé selon la revendication 6, caractérisé en ce que, pour calculer un incrément $\underset{\rightarrow \mu}{\Psi}(v)$ depuis la valeur de l'indicateur spatial de flux de stator au début du vième jeu de calcul jusqu'à la valeur à la fin de ce jeu de calcul, on forme d'abord un indicateur spatial $\underset{\rightarrow v}{w}$ à partir des valeurs moyennes temporelles ($w_{av}$, $w_{bv}$, $w_{cv}$) des tensions normalisées à la demi-tension continue entre les connexions ce machine et le point de potentiel moyen (M'), à l'occasion de quoi les trois valeurs moyennes $w_{mv}$ sont calculées selon l'équation suivante:

$$w_{mv} = \text{sign}[X_{mv}] \bullet [1 - 2 \, p \bullet |X_{mv}|]$$

8. Procédé selon la revendication 7, caractérisé en ce que l'incrément de l'onduleur de flux de stator $\Delta \underset{\rightarrow \mu}{\Psi}(v)$ entre le début et la fin du vième jeu de calcul est calculé selon l'équation suivante:

$$\Delta \underset{\rightarrow \mu}{\Psi}(v) = \left[ \underset{\rightarrow v}{w} \bullet E_{dv} - \overline{R_{sv} \bullet i_s}(v) \right] \bullet T_c$$

où $\underset{\rightarrow v}{w}$ = indicateur spatial des valeurs moyennes des tensions normalisées des connexions de machine dans le vième jeu de calcul.

9. Procédé selon l'une des revendications 1 à 8, caractérisé en ce que, pour simplifier le calcul de la valeur moyenne temporelle de l'indicateur spatial des chutes de tension internes de l'enroulement de stator, la résistance équivalente - neutre ($R_{Sv}$), actuelle pour le vième jeu de calcul, de l'enroulement de stator est multipliée par la valeur moyenne $\underset{\rightarrow}{i}(v)$ de l'indicateur spatial de flux de stator qui est obtenue quand on multiplie la valeur $\underset{\rightarrow}{i}(v-1)$ l'indicateur spatial, qui est affectée au moment initial du vième jeu de calcul, par le facteur complexe $\underline{F}(\varepsilon_v)$ qui est calculé selon l'équation suivante:

$$\underline{F}(\varepsilon_v) = \frac{\sin \varepsilon_v}{\varepsilon_v} \bullet e^{j\varepsilon_v} \approx \left(1 - \tfrac{1}{3}\varepsilon_v^2\right) + j\left(\varepsilon_v - \tfrac{1}{3}\varepsilon_v^3\right)$$

10. Procédé selon la revendication 9, caractérisé en ce que le facteur $\underline{F}(\varepsilon_v)$ est approché par la valeur un.

Fig. 1

SR

$S_a$ $S_b$ $S_c$

$E_d$
$E_d$

M'

$V_a$ $V_b$ $V_c$

$c$ $i_c$

$e_{aM'}$ $a$ $b$

$i_a$ $i_b$

IMA

$i_s$ $R_S \cdot i_S$ $\dot{\psi}_\sigma$ $i_r$

$R_S$ $L_\sigma$

$e_s$ $\dot{\psi}_\mu$ $L_\mu$ $\dot{\psi}_r$ $R_r$ $R_r \cdot i_r$

$jw\underline{\psi}_r$

Fig. 2

$y = \dfrac{e_{mM'}}{E_d}$

$y \int y\,dz$

$\int_0^x y\,dx = z$

$1$

$1 - |X_{m\nu}|$

$0.5 - X^2_{m\nu} = \bar{z}$

$1 - 2|X_{m\nu}|$

$0$

$1 - |X_{m\nu}|$ $1$ $\dfrac{\tau_\nu}{T_c} = X$

$\dfrac{\tau_{\nu Sm}}{T_c}$ $|X_{m\nu}|$

$-1$ $\dfrac{t}{T_c}$

$\nu - 1$ $\nu$

Fig. 3

$\tau_\nu = T_c$

$\underline{\psi}_r(\nu)$ $\Delta\underline{\psi}_r(\nu)$ $\varepsilon_\nu$

$\bar{\underline{\psi}}_r(\nu)$ $\tau_\nu = \dfrac{T_c}{2}$

$\underline{\psi}_r(\tau_\nu)$ $\varepsilon_\nu$

$\omega_r^S \cdot \tau_\nu$

$\underline{\psi}_r(\nu-1)$

$\tau_\nu = 0$

Fig. 4